(19) Europäisches Patentamt
European Patent Office
Office européen des brevets

(11) **EP 2 154 216 A2**

(12) **EUROPÄISCHE PATENTANMELDUNG**

(43) Veröffentlichungstag:
**17.02.2010 Patentblatt 2010/07**

(51) Int Cl.:
***C09J 5/06*** *(2006.01)* ***C09J 7/02*** *(2006.01)*

(21) Anmeldenummer: **09167278.2**

(22) Anmeldetag: **05.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **15.08.2008 DE 102008037866**

(71) Anmelder: **TESA SE**
**20253 Hamburg (DE)**

(72) Erfinder:
- **Husemann, Marc Dr.**
  **22605, Hamburg (DE)**
- **Klier, Daniel Dr.**
  **21465, Reinbek (DE)**

(54) **Verfahren zur blasenfreien Verklebung von hochtransparenten Materialien**

(57) Die vorliegende Erfindung betrifft ein Verfahren zur blasenfreien und hochfesten Verklebung von transparenten Materialien, bei dem auf dem transparenten Material eine transparente, hitze-aktivierbare Klebefolie angeordnet wird und bei dem die hitze-aktivierbare Klebefolie durch Wärmezufuhr aktiviert wird. Es wird vorgeschlagen, dass die Aktivierung der hitze-aktivierbare Klebefolie unter Applikation von Vakuum auf die Anordnung aus transparenten Material und hitzeaktivierbarer Klebefolie durchgeführt und so ein Verbund aus transparentem Material und Klebefolie hergestellt wird.

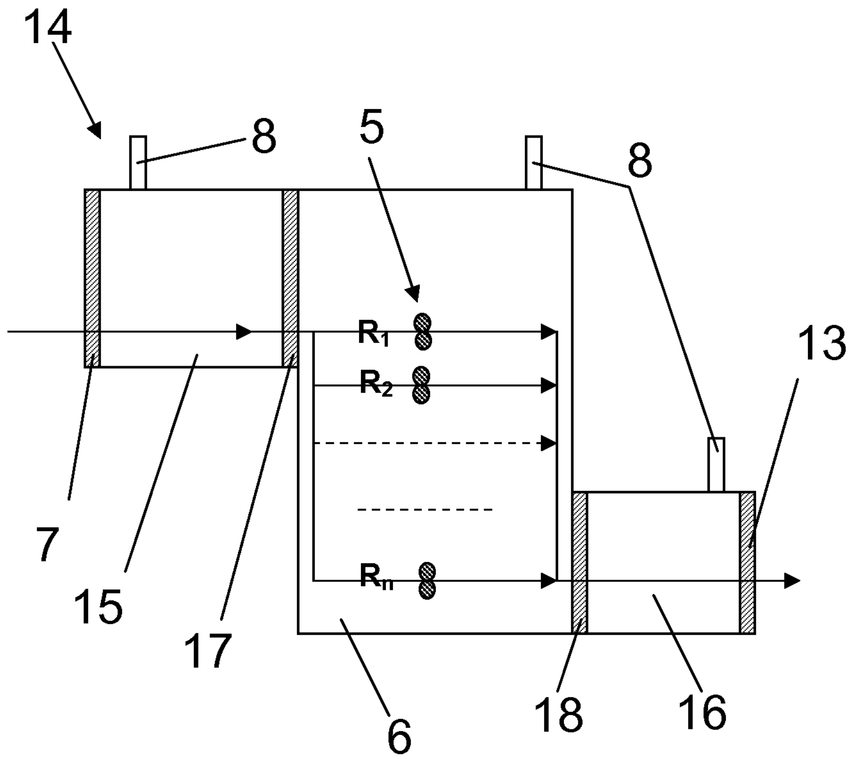


Fig. 4



Printed by Jouve, 75001 PARIS (FR)

## Beschreibung

Die Erfindung betrifft ein Verfahren zur blasenfreien und hochfesten Verklebung von transparenten Materialien, insbesondere Folien oder Platten, gemäß dem Oberbegriff von Anspruch 1 sowie einen hochtransparenten Verbund gemäß dem Oberbegriff von Anspruch 15.

Klebebänder sind im Zeitalter der Industrialisierung weitverbreitete Verarbeitungshilfsmittel. Insbesondere für den Einsatz in der elektronischen Industrie werden Klebebänder sehr häufig eingesetzt. Hierbei müssen diese Klebebänder immer speziellere Anforderungen erfüllen. Insbesondere im Display-Bereich werden neben der Verklebung sehr unterschiedliche Anforderungen im Hinblick auf Lichtmanagement gestellt. So müssen Klebebänder lichtreflektierend, lichtabsorbierend oder hochtransparent sein. Ein spezieller Einsatzbereich sind z.B. Mobiltelefone, die immer häufiger mit Touchpanels versehen werden, um so die Informationseingabe zu erleichtern. Das Touchpanel wird auf dem Display direkt oder auf dem Fenster des Mobiltelefons verklebt. Daher werden hier sehr hohe Anforderungen im Hinblick auf Transparenz und Reinheit gestellt, damit sich die Lichtausbeute des durch das Display erzeugten Bildes nicht verringert. Zudem werden immer mehr kapazitive Touchpanels eingesetzt, da diese Vorteile in der Präzision aufweisen. Bei diesen handelt es sich häufig um rigide Bauteile. Ein Klebemittel muss daher ebenfalls zur Verklebung rigider Materialien geeignet sein, z.B. eines rigiden Touchpanel auf einem rigiden Fenster. Dieser Prozess ist relativ schwierig und aufwendig, da hier beide Substrate fest sind und nicht einfach aufeinander laminiert werden können, ohne dass sich Luftblaseneinschlüsse bilden.

Eine Möglichkeit besteht in der Verklebung durch Flüssigkleber, so dass im flüssigen Zustand noch Blasen herausgedrückt werden können und der Flüssigkleber erst daran anschließend langsam aushärtet. Solche Prozesse erfordern aber sehr viel Zeit. Zudem kann bei einem vorzeitigen Prozessstillstand der Flüssigkleber austrocknen.

Des Weiteren kann zur Laminierung auch ein hochtransparentes Haftklebeband eingesetzt werden. Diese sind z.B. kommerziell durch die Firmen 3M (z.B. 3M 8141) oder Nitto Denko (z.B. Nitto Denko CS9621) erhältlich. Die Praxis zeigt aber dass sich bei der größerflächigen Laminierung die Luft nicht nach allen Seiten herausdrücken lässt und somit Luftblaseneinschlüsse bestehen bleiben, die auch in einem anschließenden Autoklavenprozess nur sehr schwer heraus diffundieren. Es besteht somit der Bedarf für ein Verfahren, welches die Laminierung von hochtransparenten Medien, insbesondere von festen Medien, deutlich erleichtert.

Die vorliegende Erfindung löst das Problem bei einem Verfahren gemäß dem Oberbegriff von Anspruch 1 durch die kennzeichnenden Teile von Anspruch 1. Eine Alternative Lösung stellt ein hochtransparenter Verbund gemäß Anspruch 15 bereit. Bevorzugte Ausgestaltungen und Weiterbildungen sind Gegenstand der jeweiligen Unteransprüche.

Die grundlegende Idee der vorliegenden Erfindung besteht darin, im Gegensatz zu der bekannten Vorgehensweise Lufteinschlüsse nachträglich zu entfernen, bereits die Entstehung der Lufteinschlüsse zu minimieren. Hierzu erfolgt die Erstellung des Klebeverbundes unter Vakuum, also unterhalb Atmosphärendrucks, so dass Luft dem Verbund direkt entzogen wird.

Ausgangspunkt für dieses Verfahren bildet die Verwendung hochtransparenter hitzeaktivierbarer Klebefolien. Hochtransparente Klebefolien sind insbesondere solche Folien, die selbst eine Transmission von größer 90 % und einen Haze von maximal 5 % nach ASTM D 1003 aufweisen. Diese Klebefolien, die beispielsweise auch in Form von Stanzlingen oder als Klebeband vorliegen können, sind bei Raumtemperatur (23°C) nicht tackig und werden erst durch Wärmezufuhr aktiviert.

Erfindungsgemäß ist folgendes Verfahren zur Blasenvermeidung bei der Herstellung eines Klebeverbundes vorgesehen:

Zunächst wird eine hitzeaktivierbare Klebefolie auf einem transparenten Material, wie zum Beispiel einer Folie oder einer Platte, angeordnet. Sofern die hitzeaktivierbare Klebefolie zuvor mit einer Trennfolie abgedeckt ist, wird diese zunächst entfernt. Dieser Verbund wird dann einem Vakuum ausgesetzt. Unter Vakuumbedingungen wird sodann die Klebefolie durch Zufuhr von Wärme aktiviert und so eine Verklebung durchgeführt. Besonders bevorzugt ist es dabei, wenn zusätzlich noch ein möglichst gleichmäßiger Druck auf den Verbund ausgeübt wird, um das aneinander haften zu unterstützen und evtl. Lufteinschlüsse auszudrücken.

Sofern ein mehrschichtiger Verbund hergestellt werden soll, wird bevorzugt vor der Hitzeaktivierung ein zweites transparentes Material auf der zweiten Seite der zu verklebenden hitzeaktivierbaren Klebefolie angeordnet.

Die Applikation von Vakuum bedeutet zunächst, dass das Verfahren unterhalb des Umgebungsdrucks ausgeführt wird. Als bevorzugt geeignet zur Vermeidung von Lufteinschlüssen hat sich ein Druck von weniger als 50 mbar, weiter bevorzugt von weniger als 10 mbar und ganz bevorzugt von weniger als 1 mbar herausgestellt.

Sofern ein zusätzlicher Druck bei der Verklebung des Verbundes auf diesen aufgebracht wird, so sollte dieser bevorzugt in einem Bereich von etwa 1,5 bar bis etwa 10 bar liegen. Bei einem niedrigeren Druck besteht die Möglichkeit, dass die Klebeverbindung nicht ausreichend fest wird, bei einem höheren Druck könnte die Klebmasse am Rand der Klebefolie ausgequetscht werden.

Die Applikation von zusätzlichem Druck und/oder die Temperaturzufuhr zur Aktivierung der Klebefolie erfolgt in bevorzugter Weise mittels eines Laminators, insbesondere mittels eines Heizrollenlaminators oder eines Plattenlaminators. Sofern ein Heizrollenlaminator verwendet wird, kann dieser bevorzugt mit einer Geschwindigkeit von etwa 0,1 m/min bis etwa 10 m/min betrieben werden.

Die Temperatur, bei der die Verbundherstellung, insbesondere als auch die Aktivierung der Klebefolie erfolgt, sollte bevorzugt zwischen etwa 60°C und etwa 250°c liegen. Die optimale Temperatur bei einem Prozess mit einem Heizrollenlaminator liegt dabei im Bereich von etwa 60°C bis etwa 180°C (Rollentemperatur) und mit einem Plattenlaminator im Bereich von etwa 60°C bis etwa 250°C, bevorzugt im Bereich von etwa 130°C bis etwa 200°C (Plattentemperatur).

Der Prozess läuft bevorzugt im Reinraum ab, um Einschlüsse von Verunreinigungen zu vermeiden. Insbesondere vorteilhaft ist eine Reinraumklasse ISO 07 nach ISO 14644-1, d.h. ein Raum mit weniger als 352.000 Partikeln (0,5 μm und größer) / $m^3$ Luft. Dies entspricht der Reinraumklasse 10.000 nach US Fed. Std. 209D.

Ferner kann eine Nachtemperierung vorgesehen werden, die bevorzugt außerhalb des Vakuums stattfindet. Die Nachtemperierung dient der vollständigen Aushärtung der Klebfolie. Sie erfolgt bevorzugt bei einer Temperatur zwischen etwa 100°C und etwa 230°C. Die Dauer einer potentiellen Nachtemperierung sollte im Bereich von etwa 10 Minuten bis zu etwa 12 Stunden liegen. Die genaue Abstimmung der Notwendigkeit einer Nachtemperierung, der Temperatur sowie der Dauer ist abhängig von der eingesetzten Klebmasse.

Des Weiteren kann es von Vorteil sein, wenn nach der Laminierung und ggf. auch nach der weiteren Nachtemperierung noch innerhalb des Vakuums oder auch außerhalb des Vakuums ein Autoklavenprozess erfolgt, insbesondere also eine weitere Temperatur- und/oder Druckbehandlung.

Im Folgenden werden die einzusetzenden Materialien sowie die Prozesse im Detail beschrieben.

*Hochtransparente Hitzeaktivierbare Klebefolie*

Bei der Auslegung und Verklebung optischer Bauteile, wie z.B. von Glasfenstern oder Folien, muss die Wechselwirkung der verwendeten Materialien mit der Art des eingestrahlten Lichts berücksichtigt werden. In einer abgeleiteten Version nimmt der Energieerhaltungssatz die Form

$$T(\lambda) + p(\lambda) + a(\lambda) = 1$$

an, wobei T(λ) den Anteil des transmittierten Lichts, p(λ) den Anteil des reflektierten Lichts und a(λ) den Anteil des absorbierten Lichts beschreibt (λ: Wellenlänge) und wobei die Gesamtintensität des eingestrahlten Lichts auf 1 normiert ist.

Je nach Anwendung des optischen Bauteils gilt es, einzelne dieser drei Terme zu optimieren und die jeweils anderen zu unterdrücken. Optische Bauteile, die für die Transmission ausgelegt werden, sollen sich durch Werte von T(λ), die nahe bei 1 liegen, auszeichnen. Dies erreicht man, indem p(λ) und a(λ) im Betrag reduziert werden.

Für die Verklebung von transparenten Materialien haben sich insbesondere hitzeaktivierbare Folien basierend auf einer Klebmasse auf (Meth)acrylatcopolymer- und (Meth)acrylatblockcopolymerbasis als geeignet erwiesen. Klebemassen auf (Meth)acrylatcopolymer- und (Meth)acrylatblockcopolymerbasis weisen normalerweise keine nennenswerte Absorption im sichtbaren Bereich, d. h. im Wellenlängenbereich zwischen 400 nm und 700 nm, auf. Dies kann leicht durch Messungen mit einem UV/Vis-Spektralphotometer überprüft werden. Von entscheidendem Interesse ist daher p (λ). Reflexion ist ein Grenzflächenphänomen, das von den Brechungsindizes $n_{d,i}$ von zwei in Kontakt tretenden Phasen i abhängt und durch die Fresnel-Gleichung wie folgt beschrieben wird:

$$\rho(\lambda) = \left(\frac{n_{d,2} - n_{d,1}}{n_{d,2} + n_{d,1}}\right)^2$$

Für den Fall isorefraktiver Materialien, für die $n_{d,2} = n_{d,1}$ gilt, wird p(λ) = 0. Dies erklärt die Notwendigkeit, den Brechungsindex einer für optische Bauteile zu verwendenden Klebemasse denjenigen der zu verklebenden Materialien anzupassen. Typische Werte für den Brechungsindex verschiedene Gläser sind beispielhaft in Tabelle 1 aufgeführt.

| Tabelle 1 | |
|---|---|
| Material | Brechungsindex $n_d$ |
| Quarzglas | 1,458 |
| Borkron (BK7) | 1,514 |
| Borkron | 1,518 |
| Flint | 1,620 |
| (Quelle: Pedrotti, Pedrotti, Bausch, Schmidt, Optik, 1996, Prentice-Hall, München. Daten bei $\lambda$ = 588 nm) | |

Der Brechungsindex $n_d$ ist nach dem Snelliusschen Brechungsgesetz definiert und hängt von der Wellenlänge des eingestrahlten Lichts und von der Temperatur ab. Er wird in dieser Schrift als derjenige Wert verstanden, der bei T = 20 °C und Licht der Natrium-D-Linie ($\lambda$ = 590 nm $\pm$ 150 nm) gemessen wird.

Eine konkrete Anwendung des Verfahrens betrifft die vollflächige Verklebung von Glasfenstern, so dass je nach eingesetztem Glas der Brechungsindex der Klebmasse angepasst werden muss, um eine möglichst hohe Transmission zu erreichen. Für die Verklebung von Quarzglas eignen sich z.B. besonders gut Hitzeaktivierbare (Meth)acrylatklebemassen.

Die Klebemassen müssen durch ihre nicht vorhandene Klebrigkeit eine relativ hohe Glasübergangstemperatur aufweisen. So sollte die statisch per DSC (Differential Scanning Calorimetry / Dynamische Differenzkalorimetrie) gemessene Glasübergangstemperatur bevorzugt größer 25°C sein, weiter bevorzugt größer 35°C und äußerst bevorzugt größer 45°C. Dies kann z.B. bei Polyacrylaten mit einem erhöhten Anteil von Aromaten oder Methacrylaten im Polymer erreicht werden.

Unter Erweichungstemperatur wird bei amorphen Systemen die Glasübergangstemperatur und bei semikristallinen Systemen die Schmelztemperatur verstanden. Glastemperaturen werden als Ergebnisse aus quasistationären Verfahren wie z.B. Differential Scanning Calometry (DSC) angegeben.

In einem Fall der Erfindung werden als Hitzeaktivierbare Klebemassen Acrylatblockcopolymere eingesetzt. Im Fall der Acrylatblockcopolymere lassen sich eine große Anzahl von Monomeren für die Synthese einer Klebemasse mit hohem Brechungsindex nutzen, so dass eine breite Palette von Klebeeigenschaften durch die chemische Zusammenstellung eingestellt werden kann. Weiterhin ergibt sich der Vorteil, dass hoch kohäsive Klebemassenschichten ohne zusätzliche thermische Vernetzungsschritte im Prozess hergestellt werden können.

Das Acrylatblockcopolymer weist bevorzugt mindestens die Einheit P(A)-P(B)-P(A) aus wenigstens einem Polymerblock P(B) und wenigstens zwei Polymerblöcken P(A) auf, wobei

- P(A) unabhängig voneinander Homo- oder Copolymerblöcke mindestens zu 75 Gew.-% aus Monomeren der Gruppe A repräsentieren, wobei die (Co-)Polymerblöcke P(A) jeweils eine Erweichungstemperatur im Bereich von +50 °C bis +175 °C aufweisen,
- P(B) einen Homo- oder Copolymerblock aus Monomeren der Gruppe B repräsentiert, wobei der (Co-)Polymerblock P(B) eine Erweichungstemperatur im Bereich von +10°C bis +25°C aufweist,
- die (Co-)Polymerblöcke P(A) und P(B) bei 25 °C nicht homogen miteinander mischbar sind,
- die resultierende Klebemasse einen Brechungsindex $n_{d,H}$ von $n_{d,H}$ > 1,47 bei 20 °C, vorzugsweise > 1, 52 bei 20°C, aufweist,
- zumindest einer der (Co-)Polymerblöcke P(A) einen Brechungsindex $n_{d,A}$ von $n_{d,A}$>1,58 bei 20°C aufweist,
- der (Co-)Polymerblock P(B) einen Brechungsindex $n_{d,B}$ von $n_{d,B}$ > 1,43 bei 20 °C aufweist.

Die beiden Polymerblöcke P(A) können dabei identisch sein, sie können sich jedoch auch voneinander unterscheiden. Wesentlich ist lediglich, dass diese beide die zuvor genannten Kriterien erfüllen.

Ferner ist es besonders vorteilhaft, wenn alle (Co-)Polymerblöcke P(A) jeweils einen Brechungsindex $n_{d,A}$ von $n_{d,A}$ > 1,58 bei 20°C aufweisen. Der Vorteil derartig hoher Brechungsindizes besteht darin, dass bei sehr hohen Brechungsindizes der Übergang zwischen Klebeschicht und Glass oder z.B. PC-Folie sehr gering im Hinblick auf die Differenz zwischen den unterschiedlichen Brechungsindizes ist. Dadurch wird die Reflektion minimiert und die gesamte Transmission des Verbundes erhöht sich. Viele der zu verklebenden transparenten Substrate weisen einen Brechungsindex von deutlich höher als 1,50 auf

Weiterhin ist es von Vorteil, wenn das beziehungsweise die Blockcopolymere zumindest zu 50 Gew.-% in der Klebemasse vorliegen. Zusätzlich können ggf. auch andere Homopolymere zugemischt sein. Bei sehr hohen Anteilen

von Homopolymeren kann die Phasenseparation der Hartblock- und der Weichblockdomänen gestört werden und dann reduziert sich die innere Kohäsion der Klebemasse und diese wird bei erhöhten Temperaturen sehr schnell weich.

Im Weiteren werden die Polymerblöcke P(A) auch als Hartblöcke und die Polymerblöcke P(B) als Elastomerblöcke bezeichnet.

Als besonders vorteilhaft haben sich Klebemassen herausgestellt, die einen Brechungsindex $n_d$ von größer 1,52 besitzen und bei denen der Aufbau des Blockcopolymers / der Blockcopolymere durch eine oder mehrere der folgenden allgemeinen Formein beschrieben werden kann:

P(A)-P(B)-P(A) (I)

P(B)-P(A)-P(B)-P(A)-P(B) (II)

$[P(A)-P(B)]_nX$ (III)

$[P(A)-P(B)]_nX[P(A)]_m$ (IV)

wobei n = 3 bis 12, m = 3 bis 12 und X eine multifunktionelle Verzweigungseinheit darstellt, also ein chemisches Bauelement, über das verschiedene Polymerarme miteinander verknüpft sind,
wobei weiterhin die Polymerblöcke P(A) unabhängig voneinander Homo- oder Copolymerblöcke mindestens zu 75 Gew.-% aus Monomeren der Gruppe A (siehe unten) repräsentieren,
wobei die Polymerblöcke P(A) jeweils eine Erweichungstemperatur im Bereich von +50 °C bis +175 °C aufweisen und einen Brechungsindex $n_{d,A}$ von größer 1,58 besitzen, und
wobei die Polymerblöcke P(B) unabhängig voneinander Homo- oder Copolymerblöcke aus Monomeren der Gruppe B (siehe unten) repräsentieren,
wobei die Polymerblöcke P(B) jeweils eine Erweichungstemperatur im Bereich von +10°C bis +25 °C aufweisen und einen Brechungsindex $n_{d,B}$ von größer 1,43 besitzen.

Bei den Polymerblöcken P(A), wie sie zuvor beschrieben sind, kann es ich um Polymerketten einer einzigen Monomersorte aus der Gruppe A oder um Copolymere aus Monomeren verschiedener Strukturen aus der Gruppe A handeln, gegebenenfalls um Copolymere mindestens zu 75 Gew.-% aus Monomeren der Gruppe A und bis zu 25 Gew.-% aus Monomeren der Gruppe B. Insbesondere können die eingesetzten Monomere aus der Gruppe A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B. Vorliegend soll der Begriff "Polymerblöcke" somit sowohl Homo- als auch Copolymerblöcke einschließen, soweit nicht etwas anderes im Einzelfall spezifiziert wird.

Die Einheit P(A)-P(B)-P(A) kann dabei sowohl symmetrisch [entsprechend $P^1(A)$-P(B)-$P^2(A)$ mit $P^1(A) = P^2(A)$] als auch unsymmetrisch [entsprechend der Formel $P^3(A)$-P(B)-$P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn die Blockcopolymere einen symmetrischen Aufbau derart aufweisen, dass in der Kettenlänge und/oder der chemischen Struktur identische Polymerblöcke P(A) und/oder dass in der Kettenlänge und/oder der chemischen Struktur identische Polymerblöcke P(B) vorliegen. $P^3(A)$ und $P^4(A)$ können sich insbesondere in ihrer chemischen Zusammensetzung und/oder ihrer Kettenlänge unterscheiden.

Ausgangsmonomere der Gruppe A für die Polymerblöcke P(A) werden bevorzugt derart ausgewählt, dass die resultierenden Polymerblöcke P(A) mit den Polymerblöcken P(B) nicht mischbar sind und dementsprechend Mikrophasenseparation eintritt.

Vorteilhaft liegen die typischen Domänengrößen bei kleiner 400 nm, weiter bevorzugt bei kleiner 200 nm.

Geeignete Monomere der Gruppe A enthalten eine C=C-Doppelbindung, insbesondere eine oder mehrere Vinylgruppen im eigentlichen Sinne und/oder vinylähnliche Gruppen. Als vinylähnliche Gruppen werden hier solche Gruppen bezeichnet, bei der die Wasserstoffatome der ungesättigten C-Atome teilweise oder vollständig durch organische und/oder anorganische Reste substituiert sind. In diesem Sinne zählen auch Acrylsäure, Methacrylsäure und/oder deren Derivate zu den vinylähnliche Gruppen aufweisenden Verbindungen. Vorstehende Verbindungen werden im Weiteren zusammenfassend als Vinylverbindungen bezeichnet.

Vorteilhafte Beispiele für Verbindungen, welche als Monomere der Gruppe A eingesetzt werden, sind Vinylaromaten, die als Polymerisate einen Brechungsindex von größer 1,58 bei 20°C besitzen. Konkrete Monomere, deren Aufzählung aber nur beispielhaft ist, sind z.B. Styrol, α-Methylstyrol, o-Methylstyrol, o-Methoxystyrol, p-Methoxystyrol oder 4-Methoxy-2-methylstyrol.

Weiterhin lassen sich als Monomere der Gruppe A vorteilhaft Acrylate, wie z.B. mit Acrylat terminiertes Polystyrol oder α-Bromphenylacrylat, einsetzen, und/oder Methacrylate, wie z.B. mit Methacrylat terminiertes Polystyrol (beispielsweise Methacromer PS 12 der Fa. Polymer Chemistry Innovations), 1,2-Diphenylethylmethacrylat, Diphenylmethylmethacrylat, o-Chlorbenzylmethacrylat, p-Bromphenyl-methacrylat, und/oder Acrylamide, wie z.B. N-Benzylmethacrylamid.

Die Monomere können auch in Gemischen miteinander eingesetzt werden. Da zur Erzielung eines Brechungsindex $n_d$ von größer 1,58 für die Polymerblöcke P(A) auch Monomergemische eingesetzt werden können, kann auch eine oder mehrere Komponenten als Homopolymer einen Brechungsindex $n_d$ von kleiner 1,58 bei 20 °C besitzen. Konkrete Beispiele für derartige Comonomere ohne Anspruch auf Vollständigkeit sind o-Cresylmethacrylat, Phenylmethacrylat, Benzylmethacrylat oder o-Methoxyphenylmethacrylat.

Weiterhin können die Polymerblöcke P(A) aber auch derart als Copolymere aufgebaut sein, dass sie zu mindestens 75 % aus den vorstehenden Monomeren der Gruppe A oder einem Gemisch dieser Monomere bestehen können, was zu einer hohen Erweichungstemperatur führt, aber bis zu 25 % auch Monomere der Gruppe B enthalten kann, was zu einer Erniedrigung der Erweichungstemperatur des Polymerblocks P(A) führt. In diesem Sinne seien beispielhaft Alkylacrylate genannt, die entsprechend der Struktur B1 (siehe unten) und dem hierzu gesagten definiert sind.

Monomere der Gruppe B für den Elastomerblock P(B) werden vorteilhaft ebenfalls so gewählt, dass sie C=C-Doppelbindungen (besonders Vinylgruppen und vinylähnliche Gruppen) aufweisen, mit der Maßgabe, dass der Polymerblock P(B) einen Brechungsindex $n_{d,B}$ von mindestens 1,43 aufweist.

Als Monomere der Gruppe B werden vorteilhaft Acrylatmonomere eingesetzt. Hierfür sind prinzipiell alle dem Fachmann geläufigen Acrylatverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von +10 °C bis +25°C bedingen. Entsprechend können bevorzugt Vinylmonomere gewählt werden.

Für die Präparation der Polymerblöcke P(B) werden vorteilhaft zu 75 bis 100 Gew.-% Acrylsäure- und/oder Methacrylsäurederivate der allgemeinen Struktur

$$CH_2=C(R^1)(COOR^2) \qquad (B1)$$

eingesetzt,

wobei $R^1$ = H oder $CH_3$ und $R^2$ = H oder lineare, verzweigte oder ringförmige, gesättigte oder ungesättigte Kohlenwasserstoffketten mit 1 bis 30, insbesondere mit 4 bis 18 Kohlenstoffatomen darstellt,

und bis zu 25 Gew.-% an Monomeren (B2) aus der Gruppe der Vinylverbindungen, wobei diese Monomere B2 günstigenfalls funktionelle Gruppen enthalten.

Bei den Monomeren B2 handelt es sich um konventionelle Monomere, die eine endständige Vinylverbindung zur Polymerisation aufweisen, die aber auch eine funktionelle Gruppe tragen können, beispielsweise auch Acrylate.

Die vorstehenden Gewichtsprozentangaben addieren sich bevorzugt zu 100 %, die Summe kann aber auch weniger als 100 Gew.-% betragen, sofern weitere (polymerisierbare) Monomere vorhanden sind.

Acrylmonomere der Gruppe B, die sehr bevorzugt im Sinne der Verbindung B1 als Komponenten für Polymerblöcke P(B) eingesetzt werden, umfassen Acryl- und Methacrylsäureester mit Alkyl-, Alkenyl- und/oder Alkinylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl- oder Norbornylacrylat und Isobornylacrylat.

Weiterhin können optional als Monomere B2 für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Cyclen und Heterocyclen in α-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne von B2 für den Elastomerblock P(B) eignen sich weiterhin Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

Sämtliche einsetzbaren Monomere können ebenfalls in einer halogenierten Form verwendet werden.

In einer bevorzugten Ausführungsform der Hitzeaktivierbaren Klebemassen mit einem Brechungsindex größer 1,52 enthalten einer oder mehrere der Polymerblöcke eine oder mehrere aufgepfropfte Seitenketten. Dabei kann es sich um Verbindungen handeln, bei denen die Seitenketten durch graft-from-Prozesse (Aufpolymerisation einer Seitenkette ausgehend von einem bestehenden Polymerrückgrat) oder durch graft-to-Prozesse (Anbindung von Polymerketten an ein Polymerrückgrat über polymeranaloge Reaktionen) erhalten werden.

Als Makromonomere aus den Gruppen A und B können insbesondere zur Herstellung von Blockcopolymeren

mit Seitenketten derartig funktionalisierte Monomere gewählt werden, die einen graft-from-Prozess zum Aufpfropfen von Seitenketten ermöglichen. Hier sind insbesondere Acrylat- und Methacrylatmonomere zu nennen, die als Funktionalisierung Halogene tragen oder andere funktionellen Gruppen, die beispielsweise einen ATRP-Prozess (Atom Transfer Radical Polymerization) erlauben. In diesem Zusammenhang sei auch die Möglichkeit genannt, über die Zugabe von Makromonomeren während der Polymerisation gezielt Seitenketten in die Polymerketten einzuführen.

In einer speziellen Ausgestaltung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten der Gruppe B können mit dieser Zielsetzung insbesondere Acrylester genutzt werden, welche einen ungesättigten Kohlenwasserstoffrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reagierenden Doppelbindungen einsetzen. Besonders bevorzugte Beispiele für entsprechende Comonomere sind Isopren und/oder Butadien, aber auch Chloropren.

In einer weiteren Ausführungsform der Hitze-aktivierbaren Klebemasse sind Polymerblöcke P(A) und/oder P (B) derart funktionalisiert, dass eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der hitzeaktivierbaren Klebemasse ist, dass die Molmasse $M_n$ (Zahlenmittel) zumindest eines der Blockcopolymere, bei mehreren Blockcopolymeren insbesondere aller Blockcopolymere zwischen ca. 10.000 und ca. 600.000 g/mol, bevorzugt zwischen 30.000 und 400.000 g/mol, besonders bevorzugt zwischen 50.000 g/mol und 300.000 g/mol liegt.

Der Anteil der Polymerblöcke P(A) liegt vorteilhaft zwischen 5 und 40 Gewichtsprozent des gesamten Blockcopolymers, bevorzugt wischen 7,5 und 35 Gewichtsprozent, besonders bevorzugt zwischen 10 und 30 Gewichtsprozent. Die Polydispersität D des Blockcopolymers liegt bevorzugt bei kleiner 3, gegeben durch den Quotienten aus Massenmittel $M_w$ und Zahlenmittel $M_n$ der Molmassenverteilung. Bei mehreren Blockcopolymeren in der hitzeaktivierbaren Klebemasse gelten die vorstehenden Angaben für die Anteile und die Polydispersität D vorteilhaft für zumindest eines der Blockcopolymere, bevorzugt jedoch für alle vorhandenen Blockcopolymere.

In einer Weiterentwicklung wird das Verhältnis $V_{A/B}$ [$V_{A/B} = \bar{\ell}_{P(A)}/\bar{\ell}_{P(B)}$] der mittleren Kettenlängen $\bar{\ell}_{P(A)}$ der Polymerblöcke P(A) zu den Kettenlängen $\bar{\ell}_{P(B)}$ der Polymerblöcke P(B) so gewählt wird, dass die Polymerblöcke P(A) als disperse Phase ("Domänen") in einer kontinuierlichen Matrix der Poylmerblöcke P(B) vorliegen, insbesondere als kugelförmige oder verzerrt kugelförmige oder zylinderförmige Domänen. Dies ist bevorzugt der Fall bei einem Gehalt an Polymerblöcken P(A) von kleiner als ca. 25 Gew.-%. Die Ausbildung von hexagonal gepackten zylindrischen Domänen der Polymerblöcke P(A) ist ebenfalls möglich.

Bei weiteren vorteilhaften Ausführungsformen der hitzeaktivierbaren Klebemasse beinhaltet diese einen Blend aus

- zumindest einem Diblockcopolymer mit zumindest einem Triblockcopolymer, oder
- zumindest einem Diblockcopolymer mit zumindest einem sternförmigen Blockcopolymer,
- zumindest einem Triblockcopolymer mit zumindest einem sternförmigen Blockcopolymer,

wobei bevorzugt zumindest eine der vorgenannten Komponenten, vorteilhaft alle Blockcopolymer-Komponenten des Blends solche Blockcopolymere im Sinne der Definition des Hauptanspruchs darstellen.

Besonders bevorzugte Ausführungsformen derartiger Blends sind die folgenden:
Blends der die Abfolge P(A)-P(B)-P(A) enthaltenden Blockcoplymere mit Diblockcopolymeren P(A)-P(B), wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockcopolymer-Blend bestehenden hitzeaktivierbaren Klebemasse zur Verbesserung ihrer Eigenschaften Polymere P'(A) und/oder P'(B) zuzusetzen.

Dementsprechend betrifft die Erfindung weiterhin hitzeaktivierbare Klebemassen auf Basis eines Blends zumindest eines Blockcopolymeren, welches einen Brechungsindex $n_d$ bei 20°C von größer 1,52 hat, mit einem Diblockcopolymer P(A)-P(B),

- wobei die Polymerblöcke P(A) der Diblockcopolymere unabhängig voneinander Homo- oder Copolymerblöcke aus den Monomeren der Gruppe A repräsentieren,

wobei die Polymerblöcke P(A) der Diblockcopolymere jeweils eine Erweichungstemperatur im Bereich von +50°C °C bis +175°C aufweisen und einen Brechungsindex $n_{d,B}$ von größer 1,58 besitzen,

- und wobei die Polymerblöcke P(B) der Diblockcopolymere unabhängig voneinander Homo- oder Copolymerblöcke aus den Monomeren der Gruppe B repräsentieren, wobei die Polymerblöcke P(B) der Diblockcopolymere jeweils eine Erweichungstemperatur im Bereich von +10°C bis +25°C aufweisen und einen Brechungsindex $d_{d,A}$ von größer 1,43 besitzen,

und/oder mit Polymeren P(A) und/oder P(B),

- wobei die Polymere P(A) Homo- und/oder Copolymere aus den Monomeren der Gruppe A repräsentieren, wobei die Polymere P(A) jeweils eine Erweichungstemperatur im Bereich von +50 °C bis + 175 °C aufweisen und einen Brechungsindex $n_{d,A'}$ von größer 1,58 besitzen,
- wobei die Polymere P(B) Homo- und/oder Copolymere aus den Monomeren der Gruppe B repräsentieren, wobei die Polymere P(B) jeweils eine Erweichungstemperatur im Bereich von +10 °C bis + 25 °C aufweisen und einen Brechungsindex $n_{d,B'}$ von größer 1,43 besitzen,
- und wobei die Polymere P'(A) beziehungsweise P'(B) bevorzugt mit den Polymerblöcken P(A) beziehungsweise P (B) der Blockcopolymere entsprechend des Hauptanspruchs mischbar sind.

Sofern sowohl Polymere P'(A) und Polymere P'(B) zugemischt sind, werden diese vorteilhaft derart gewählt, dass die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere der Gruppen A und B eingesetzt.

Die Diblockcopolymere weisen bevorzugt eine Molmasse $M_n$ (Zahlenmittel) zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt.

Typische Einsatzkonzentration von Diblockcopolymeren im Blend betragen bis zu 250 Gewichtsteile auf 100 Gewichtsteile Blockcopolymere enthaltend die Einheit P(A)-P(B)-P(A). Die Polymere P'(A) beziehungsweise P'(B) können als Homo- und auch ais Copolymere aufgebaut sein. Sie werden entsprechend dem oben gesagten vorteilhaft derart gewählt, dass sie mit den Polymerblöcken P(A) beziehungsweise P(B) (des Blockcopolymers) verträglich sind. Die Kettenlänge der Polymere P'(A) beziehungsweise P'(B) ist in bevorzugter Weise derart gewählt, dass sie die des mit ihr bevorzugt mischbaren bzw. assoziierbaren Polymerblocks nicht übersteigt, vorteilhaft 10 % niedriger, sehr vorteilhaft 20 % niedriger ist als diese. Der B-Block kann vorteilhaft auch so gewählt werden, dass seine Länge die Hälfte der Blocklänge des B-Blocks des Triblockcopolymers nicht übersteigt.

In einer weiteren möglichen Auslegung werden als hitzeaktivierbare Klebemassen (Meth)acrylatklebemassen eingesetzt.

(Meth)Acrylaklebemassen, welche durch radikalische Polymerisation erhältlich sind, bestehen zu mindestens 50 Gew.-% auf zumindest einem acrylischen Monomer aus der Gruppe der Verbindungen der folgenden allgemeinen Formel basiert:

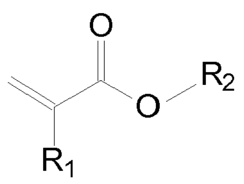

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 1 - 30 Kohlenstoffatomen.

Die Monomere werden bevorzugt dermaßen gewählt, dass die resultierenden Polymere bei Raumtemperatur keine Haftklebrigkeit aufweist. Dies kann durch eine Erhöhung der Glasübergangstemperatur erreicht werden.

Die (Meth)acrylatklebemassen weisen zumindest einen Brechungsindex $n_d$ > 1,43 bei 20 °C auf.

Die (Meth)acrylatklebemassen lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1 - 20 C-Atomen oder H ist.

Die Molmassen $M_w$ der eingesetzten Polyacrylate betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-, Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Insbesondere werden besonders bevorzugt Comonomere eingesetzt, die zumindestens einen Aromaten tragen, die eine Brechungsindex und Glasübergangstemperatur erhöhende Wirkung besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Durch die Erhöhung des aromatischen Anteils steigt der Brechungsindex der Hitze-aktivierbaren Klebemasse.

Weiterhin werden in einer weiteren Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird auf Carroy et al. in "Chemistry and Technology of UV and EB Formulation for Coatings, Inks and Paints", Oldring (Hrsg.), 1994, SITA, London verwiesen.

Zur Weiterentwicklung können den hitzeaktivierbaren Klebemassen Harze beigemischt sein. Als zuzusetzende klebrigmachenden oder Vernetzung-initiierenden Harze sind ausnahmslos alle vorbekannten und in der Literatur beschriebenen Harze einsetzbar, die keinen negativen Effekt auf die Transparenz der Klebemasse besitzen. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Auch hier werden zur Verbesserung der Transparenz bevorzugt transparente und sehr gut mit dem Polymer verträgliche Harze eingesetzt. Hydrierte oder teilhydrierte Harze weisen häufig diese Eigenschaften auf.

Weiterhin können optional Weichmacher (Plastifizierungsmittel), weitere Füllstoffe (wie. z. B. Fasern, Ruß,

Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln, zugesetzt sein, sofern sich nicht die Transparenz der Hitze-aktivierbaren Klebemasse negativ beeinflussen.

Zusätzlich können Vernetzer und Promotoren zur Vernetzung beigemischt werden. Geeignete Vernetzer sind bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht nach der Verklebung können den Klebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

*Herstellverfahren für die (Meth)acrylatklebemassen*

Zur Erzielung einer für hitzeaktiverbare Klebemassen bevorzugten Glasübergangstemperatur $T_G$ der Polymere von $T_G \geq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach der *Fox*-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil (Gew.-%) des jeweiligen Monomers n und $T_{G,n}$ die jeweilige Glasübergangstemperatur (K) des Homopolymers aus den jeweiligen Monomeren n.

Weiterhin kann der hitzeaktivierbare Kleber auch auf zumindest einem thermoplastischen oder elastomeren Material basieren.

In einer sehr bevorzugten Auslegung werden die Thermoplasten oder Elastomeren aus der Gruppe der folgenden Polymere gewählt: Polyurethane, Polyester, Polyamide, Ethylenvinylacetate, Synthesekautschuke, wie z.B. Styrolisopren Di und Triblockcopolymere (SIS), Styrolbutadien Di- und Triblockcopolymere (SBS), Styrolethylenbutadien Di- und Triblockcopolymer (SEBS), Polyvinylacetat, Polyether, Copolyamide, Copolyester, Polyolefine, wie z.B. Polyethylen, Polypropylen. Zur Erzielung einer möglichst hohen Transparenz kann es erforderlich sein, dass die beschrieben Thermoplasten als flächenförmiges Gebilde uniaxial oder biaxial gereckt sind.

Die Thermoplasten besitzen in einer beovorzugten Auslegung einen Erweichungsbereich zwischen 50°C und 150°C.

Zur Optimierung der klebtechnischen Eigenschaften und des Aktivierungsbereiches lassen sich optional Klebkraft-steigernde Harze oder Reaktivharze hinzusetzten. Der Anteil der Harze beträgt zwischen 2 und 50 Gew.-% bezogen auf den Thermoplasten oder Elastomeren. In einer weiteren Auslegung können noch Härtersysteme zugefügt werden. Es können hier alle dem Fachmann bekannten Härter eingesetzt werden, die zu einer Reaktion mit den Reaktivharzen führen.

Weitere Einzelheiten, Merkmale, Ziele und Vorteile der vorliegenden Erfindung werden nachfolgend anhand einer Zeichnung eines bevorzugten Ausführungsbeispiels näher erläutert. In der Zeichnung zeigt

Fig. 1 in schematischer Darstellung den Produktaufbau einer zu verwendenden hitzeaktivierbaren Klebefolie,
Fig. 2 in schematischer Darstellung eine alternative Ausgestaltung einer hitzeaktivierbaren Klebefolie,
Fig. 3 in schematischer Darstellung eine erste Ausgestaltung eines Heizrollenlaminators,
Fig. 4 in schematischer Darstellung eine weitere Ausgestaltung eines Heizrollenlaminators,
Fig.5 in schematischer Darstellung das erfindungsgemäße Verfahren in einem Plattenlaminator.

Eine hitzeaktivierbare Folie 1, die für den Einsatz in dem erfindungsgemäßen Verfahren geeignet ist, zeigt die Fig. 1. Dabei handelt es sich um ein so genanntes transfer tape, also ein Klebeband, welches ohne Träger auskommt. Die hitzeaktivierbare Folie 1 weist eine Klebeschicht 2 basierend auf einer hitzeaktivierbaren Klebemasse auf. Die Klebeschicht 2 ist zudem transparent ausgebildet. Vor der Applikation ist die Klebeschicht 2 oben und unten durch eine Trennfolie 3 geschützt und stabilisiert. Die Trennfolien 2 werden dann vor dem Aufbringen auf ein zu verklebendes Material entfernt.

Fig. 2 zeigte eine alternative Ausgestaltung einer hitzeaktivierbaren Folie 1. Dies weist einen Träger 4 auf, der auf beiden Seiten mit einer hitzeaktivierbaren Klebemasse beschichtet ist (Klebeschichten 2). Sowohl der Träger 4 als auch die Klebeschichten 2 sind transparent ausgebildet. Auch hier sind die Klebeschichten 2 jeweils durch eine Trennfolie 3 vor der Applikation geschützt. Die Stabilisierung übernimmt in diesem Fall der Träger 4. Als Träger 4 eignen sich insbesondere transparente Folien basierend auf Polyestern, wie z.B. PET, PC, PP, BOPP, PMMA, Polyamid, Polyurethane oder PVC. Der Klebemassenauftrag der Klebeschicht 2 beträgt in einer bevorzugten Auslegung zwischen 5 $g/m^2$ und 250 $g/m^2$, weiter bevorzugt zwischen 10 $g/m^2$ und 150 $g/m^2$.

Alternativ zu den Ausgestaltungen der Fig. 1, 2 kann die Klebefolie 1 auch nur mit einer Trennfolie 3, ggf. sogar auch ohne Trennfolie 3 ausgestattet sein.

Des Weiteren kann es von Vorteil sein, wenn die Trennfolien 3 eine Mikrostrukturierung aufweisen. Durch die Strukturierung kann noch einmal die Tackigkeit der Klebemassen reduziert werden.

Sofern in der Klebeschicht 2 eine Mikrostrukturierung vorgesehen ist, beispielsweise durch Einprägen mittels der Trennfolie 3, ergibt sich daraus die Möglichkeit, dass nach der Platzierung der Klebebänder zwischen den transparenten Folien oder Platten die eingeschlossene Luft durch aus der Mikrostrukturierung gebildeten Kanäle evakuiert werden kann.

Zur blasenfreien Verklebung können alle transparenten Materialien, insbesondere flexible Folien oder rigide (starre) Platten eingesetzt werden. So werden beispielsweise Glasplatten bzw. Glasfenster verklebt. Diese können in den unterschiedlichsten Einsatzrichtungen verwendet werden. Beispielsweise sei nur auf Glasfenster im Gebäudebereich, Glasfenster für Mobiltelefone, Glasfenster für Displays wie Plasmafernseher oder OLED-Displays hingewiesen. Neben Glas können aber auch polymere transparente Plattenmaterialein eingesetzt werden. So eignen sich als transparente Kunststoffe beispielsweise Polycarbonat, Polymethylmethacrylat, Polyurethan, orientierte Polyolefine, wie z.B. BOPP, Polyester, wie z.B. PET, PVC oder Polyvinylbutyral. Solche Platten können z.B. für die Mobiltelefon-Produktion, oder für Touchpanel eingesetzt werden, wo Sie zur rückseitigen Versteifung dienen. Weiterhin können aber auch transparente Folien verklebt werden. Neben den zuvor genannten Materialien, die ebenfalls als Folienmaterial einsetzbar sind, weisen diese häufig noch funktionelle Beschichtungen auf. So werden z.B. im Bereich der Touchpanels ITO (Indiumzinnoxid) beschichtete PET-Folien oder Folien mit einem Hardcoating, beispielsweise also einer Antikratzschicht oder einer Schicht mit antireflektiver Wirkung.

Des Weiteren können die Beschichtungen auch antireflektive und/oder IR und/oder UV-Licht absorbierende Wirkung haben. Des Weiteren können auch TAC-Folien (Triacetylcellulose) verklebt werden.

*Verklebungsprozess*

In einem ersten Schritt wird die hitzeaktivierbare Klebefolie mit der offenen Klebemassenseite auf einem ersten zu verklebenden hochtransparenten Element platziert. Für den Fall, dass die hitzeaktivierbare Klebefolie mit doppelter Trennfolie vorliegt, wird zunächst von einer Seite die Trennfolie entfernt. Die Aufbringung kann manuell oder durch einen Robotor erfolgen. Für die Platzierung kann Druck oder auch Wärme aufgebracht werden. Dies kann im einfachsten Fall durch eine manuelle Platzierung und Verwendung eines Bügeleisens erfolgen.

Anschließend wird die Trennfolie von der anderen Seite der hitzeaktivierbaren Klebefolie entfernt und das zweite hochtransparente Element wird auf der offenen Klebemasseseite platziert.

Die Applizierung von Vakuum, Druck und Temperatur kann durch verschiedene Prozesse erfolgen. In einer Auslegung erfolgt die Applizierung von Druck und Temperatur über einen Heissrollenlaminator. Der Heizrollenlaminator weist zumindest eine Rolle, bevorzugt aus Gummi, auf. In einer weiteren Ausgestaltung weist der Heizrollenlaminator zwei Rollen auf, insbesondere zwei Gummirollen, die den Druck und die Wärme für die Laminierung von oben und unten auf das zu laminierende Material aufbringen. Diese zwei Rollen weisen bevorzugt den gleichen Durchmesser auf. Die Rollen werden entweder einzeln oder zusammen von innen oder indirekt erhitzt. Für eine effiziente Laminierung müssen die Heizrollen planar zueinander laufen.

Eine erste Ausgestaltung eines bevorzugt einsetzbaren Heizrollenlaminators 5 zeigt Fig. 3. Der Heizrollenlaminator 5 ist in einer Vakuumkammer 6 angeordnet. Die Vakuumkammer 6 wird zunächst über eine Schleuse 7 befüllt. Das Material, bei welchem es sich vorliegend schon um eine Anordnung aus transparenter Folie, hitzeaktivierbarer Klebefolie, transparenter Folie handelt, wird bevorzugt rollenförmig eingebracht um einen kontinuierlichen Laminierprozess vorzunehmen. Die zuvor beschriebene Anordnung kann aber auch erst in der Kammer vorgenommen werden, beispielsweise durch ein Zukaschieren der jeweiligen Folien.

Anschließend wird die Kammer 6 über die Schleuse 7 geschlossen und über eine Vakuumpumpe 8 evakuiert. Es wird bevorzugt ein Druck von maximal 50 mbar, weiter bevorzugt von maximal 10 mbar, äußerst bevorzugt von maximal 1 mbar eingestellt. Dann wird über eine Abrollung 9 das Material abgerollt und über eine Infeedplatte 10 (Einlaufvorschub) zum Heizrollenlaminator 5 geführt. In der gezeigten Ausgestaltung des Heizrollenlaminators 5 ist die obere Rolle adjustierbar, vorliegend nämlich federnd gelagert. Je nach Ausgestaltung können auch mehrere Rollen adjustierbar sein. Ein Heizrollenlaminator mit ausschließlich starren Rollen ist ebenfalls denkbar, jedoch aufgrund der geringen Toleranzen weniger bevorzugt.

Nachdem das Material durch den Heizrollenlaminator 5 gelaufen ist, wird es mit Überführung über eine Outfeedplatte 11 (Auslaufvorschub) an einer Aufrollung 12 aufgerollt. Nach Abschluss des Laminierprozesses wird die gesamte Kammer 6 über eine zweite Schleuse 13 belüftet (Normaldruck oder Umgebungsdruck) und das Material durch die Schleuse 13 entnommen. Über die Schleuse 7 kann gleichzeitig wieder eine Befüllung der Kammer 6 erfolgen. Je nach Ausgestaltung kann die Kammer 6 auch nur mit einer Schleuse 7; 13 ausgebildet sein. In diesem Fall erfolgen Befüllung und Entnahme ausschließlich durch diese eine Schleuse. Auch können noch mehr Schleusen vorgesehen sein. Dies ist insbesondere dann vorteilhaft, wenn die zu laminierenden Materialien einzeln in die Kammer gebracht werden und die Anordnung übereinander erst in der Kammer 6 vorgenommen wird.

In bevorzugter Ausführung bringt der Heizrollenlaminator 5 einen Liniendruck von 1,5 bar bis 10 bar auf die Materialanordnung auf. Um eine vollständige Benetzung zu erzielen, können grundsätzlich der Laminierdruck und/oder die Laminiertemperatur entsprechend an die verwendeten Materialien angepasst werden.

Der Heizrollenlaminator 5 wird vorliegend kontinuierlich, d.h. solange kein Materialwechsel erfolgt, mit einer Prozessgeschwindigkeit zwischen etwa 0,1 m/min und etwa 10 m/min betrieben.

Der Heißlaminierprozess wird bevorzugt in einem Temperaturfenster von 60°C bis 180°C (Rollentemperatur) durchgeführt.

Fig. 4 zeigt eine alternative Ausgestaltung eines Heizrollenlaminators 5 in schematischer Darstellung. Dieser ist in der Vakuumkammer 6 einer Mehrkammeranordnung 14 vorgesehen. Die Mehrkammeranordnung weist neben der Vakuumkammer 6 noch eine Befüllungskammer 15 und eine Entnahmekammer 16 auf.

Über eine Schleuse 7 wird die noch nicht laminierte Anordnung aus transparentem Material, hitzeaktivierbarer Klebefolie, transparentem Material, n die Befüllungskammer 15 eingebracht. Anschließend wird die Kammer 15 geschlossen und mittels einer Vakuumpumpe 8 Vakuum erzeugt. Die Druck beträgt bevorzugt maximal 50 mbar, weiter bevorzugt maximal 10 mbar, äußerst bevorzugt maximal 1 mbar. Anschließend wird eine weitere Schleuse 17 geöffnet und die Anordnung in die Hauptkammer 6 überführt, die ebenfalls bereits evakuiert ist. Weiterhin ist die Kammer 6 mit mindestens einem Heizrollenlaminator $R_n$ bestückt. Aus praktischen Gründen werden bevorzugt maximal 6 Heizrollenlaminatoren $R_n$ eingesetzt, wobei n die Anzahl der Laminatoren wiedergibt. Es ist aber auch eine größere Anzahl n als 6 möglich. Die Heizrollenlaminatoren $R_n$ besitzen bevorzugt einen Aufbau analog dem Heizrollenlaminator aus Fig. 3.

In einer bevorzugten Auslegung der Erfindung weist der Heizrollenlaminator $R_n$ einen Liniendruck von 1,5 bar bis 10 bar. Zur vollständigen Benetzung wird allgemein der Laminierdruck bzw. die Laminiertemperatur erhöht. Weiter bevorzugt wird auch hier der Heizrollenlaminator kontinuierlich mit 0,1 m/min bis 10 m/min Prozessgeschwindigkeit betrieben.

Der Heißlaminierprozess wird bevorzugt in einem Temperaturfenster von 60°C bis 180°C (Rollentemperatur) durchgeführt.

Nach der Laminierung wird der Verbund durch eine Schleuse 18 aus der Kammer 6 in die Entnahmekammer 16 überführt, die zuvor bevorzugt auf einen Druck von maximal 50 mbar, weiter bevorzugt von maximal 10 mbar, äußerst bevorzugt von maximal 1 mbar evakuuiert wurde. Nach Schließung der Schleuse 18 wird die Kammer 16 belüftet (bis Normaldruck 1013 mbar bzw. Umgebungsdruck). Nach dem Öffnen einer weiteren Schleuse 13 wir der laminierte Verbund entnommen. Durch den mindestens 3-gliedrigen Aufbau lässt sich die Anlage semikontinuierlich betreiben, d.h. die Befüllungs- und Entnahmezeiten können deutlich reduziert werden, da die Schleusung bereits unter Vakuum erfolgt und ein regelmäßiges Be- und Entlüften der Hauptkammer 6 nicht erforderlich ist. Während der Entnahme aus Kammer 16 kann parallel die Kammer 15 oder auch die Kammer 6 befüllt werden. Bevorzugt ist eine parallele Befüllung der Kammer 6 von der Kammer 15 aus. Die Kammer 15 kann dann während eines neuen Laminiervorgangs erneut befüllt werden. Somit lassen sich, die Taktzeiten pro Kammer 15, 6, 16 auf jeweils maximal 30 s, bevorzugt auf maximal 15 s reduzieren.

Eine weitere Alternative Vorgehensweise zeigt Fig. 5 anhand eines Plattenlaminators 19. In einem ersten Schritt wird die Anordnung aus transparentem Material, hitzektivierbarer Klebefolie, transparentem Material, in den

Plattenlaminator 19 eingegeben.

Der Plattenlaminator 19 besteht aus zwei Metallplatten 20, 21, wobei zumindest eine Metallplatte 19, 20 beheizbar ist, bevorzugt beide Metallplatten19, 20. Weiterhin ist eine Metallplatte 20, 21 mit einer Dichtung 22 versehen, vorliegend nämlich die untere Metallplatte 21. Ferner weist mindestens eine Metallplatte 20, 21, vorliegend die untere Metallplatte 21, eine Öffnung 23 auf, durch die eine Evakuierung mittels einer Vakuumpumpe 24 erfolgen kann.

Die Anordnung aus transparentem Material, hitzektivierbarer Klebefolie, transparentem Material wird innerhalb des durch die Dichtung 22 abzudichtenden Bereichs platziert. Anschließend wird in Prozessschritt 1 die durch die Dichtung gebildete Kammer geschlossen durch z.B. das Absenken der 2. Metallplatte, hier der Metallplatte 20. Anschließend werden im Prozessschritt 2 durch Evakuuierung mit der Vakuumpumpe 24 die Metallplatten 20, 21 zusammengezogen. Hierdurch werden zum einen Luftblasen aus dem Verbund entfernt und zum anderen ein Druck auf den Verbund durch die Metallplatten 20, 21 aufgebaut. Weiterhin wird, dadurch dass zumindest eine Metallplatte 20; 21 beheizt ist, Wärme zur Aktivierung der hitzeaktivierbaren Folie eingebracht.

Der Prozess wird bevorzugt bei einem Druck von maximal 50 mbar, weiter bevorzugt von maximal 10 mbar, äußerst bevorzugt von maximal 1 mbar betrieben. Für einen schnellen Prozess sind bevorzugt beide Metallplatten 20, 21 beheizbar. Die Metallplattentemperatur beträgt bevorzugt zwischen 60 und 250°C, weiter bevorzugt zwischen 130 und 200°C.

Die Prozesszeiten hängen von der Zusammensetzung der hitzeaktivierbaren Folie (Geschwindigkeit einer eventuellen Vernetzung bzw. Aufschmelzen) sowie dem Zeitraum zur Evakuierung ab. In einem äußerst bevorzugten Verfahren wird das maximale Vakuum innerhalb von 45 s, weiter bevorzugt innerhalb von 30 s und äußerst bevorzugt innerhalb von 15 s erreicht. Bei konstantem Vakuum kann der Druck durch die Metallplatten 20, 21 konstant gehalten werden, bis dann wieder belüftet wird. Nach Belüftung wird der laminierte Verbund entnommen.

Dieser Prozess lässt sich auch noch weiter abwandeln. So kann z.B. die Dichtung durch ein vollflächiges Diaphragma ersetzt werden, welches zum einen die Dichtfunktion übernimmt aber auch den Verbund an die obere Metallplatte andrückt. Durch den flexiblen Charakter wird dann ein sehr gleichmäßiger Druck auf den Verbund aufgebracht. Für diesen Fall der Auslegung muss aber die Evakuierung von der oberen Metallplatte aus erfolgen und auch diese beheizt sein. Die untere Metallplatte wird zum Verschluss von unten angedrückt, bevor das Vakuum gezogen wird und der Druck auf den Verbund ausgeübt wird.

*Nachhärtung in einem Ofen*

Für die Erreichung einer maximalen Verklebungsfestigkeit kann es von Vorteil sein, die hitzeaktivierbare Klebemasse vollständig auszuhärten. Der Aushärtungsprozess kann z.B. anschließend in einem Ofen erfolgen. Der Ofen wird in einer bevorzugten Auslegung mit Umluft betrieben. Die Temperatur beträgt - je nach Aushärtungstemperatur der hitzeaktivierbaren Klebemasse - bevorzugt zwischen etwa 100°C und etwa 230°C.

Die Prozesszeit im Ofen kann zwischen 10 Minuten und 12 Stunden betragen, je nach chemischer Zusammensetzung und Aushärtungsmechanismus der hitzeaktivierbaren Klebefolie.

<u>Experimente</u>

Zur Bestätigung des Verfahrens zur blasenfreien Verklebung transparenter Materialien wurden Verklebungen mit verschiedenen transparenten hitzeaktivierbaren Klebefolien durchgeführt.

**Polymer 1**

Als hitzeaktivierbare Klebefolie wurde tesa 8440 eingesetzt. Dabei handelt es sich um ein extrudiertes Copolyamid mit einem Erweichungsbereich von 110°C-115°C. Das Material liegt bahnförmig und einseitig beschichtet auf einem Glassine Release Papier vor mit einer Schichtdicke von 40 μm. Es handelt sich also um eine hitzeaktivierbare Klebefolie, die keinen zusätzlichen Träger aufweist.

**Polymer 2**

Als hitzeaktivierbare Klebefolie wurde Irostic M 8304 (Thermoplastisches Polyurethan, Schmelzpunkt 69°C, 2 % NCO) der Fa. Huntsman eingesetzt. Das Material liegt bahnförmig und einseitig beschichtet auf einem Glassine Release Papier vor mit einer Schichtdicke von 50 μm. Auch hier handelt sich um eine hitzeaktivierbare Klebefolie, die keinen zusätzlichen Träger aufweist.

**Polymer 3**

Für die Polymerisation wurden von Stabilisatoren gereinigte Monomere eingesetzt. Ein für radikalische Polymerisationen konventioneller 2 L-Glasreaktor wurde mit 64 g Acrylsäure, 168 g n-Methylacrylat, 50 g 2-Ethylhexylacrylat, 150 g t-Butylacrylat und 300 g Aceton/Isopropanol (97:3) befüllt. Nach 45 Minuten Durchleiten mit Stickstoffgas unter Rühren wurde der Reaktor auf 58°C hochgeheizt und 0,2 g Vazo67™ (2,2'-Azodi(2-Methylbutyronitril, Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo 67™ (2,2'-Azodi(2-Methylbutyronitril, Fa. DuPont) hinzugegeben. Nach 3 h und 6 h wurde mit jeweils 150 g Aceton/Isopropanol Gemisch verdünnt. Zur Reduktion der Restinitiatoren wurden nach 8 h und nach 10 h jeweils 0,4 g Perkadox 16™ (Di(4-tert-butylcyclohexyl) peroxydicarbonate, Fa. Akzo Nobel) hinzugegeben. Die Reaktion wurde nach 48 h Reaktionszeit abgebrochen und auf Raumtemperatur abgekühlt.

Das Polymer wurde aus Lösung auf eine 75 µm dicke silikonisierte PET-Folie beschichtet. Anschließend wurde das Polymer in einem Ofen mit einer Temperaturrampe startend von 25°C steigend bis 120°C getrocknet. Dabei entstanden keine Trocknungsblasen. Die Klebemasse wurde dann mit einer zweiten 50 µm dicken silikonsierten PET-Folie abgedeckt, wobei diese Folie um 50 % leichter trennend ist als die 75 µm dicke silikonisierte Basis PET Folie. Die Schichtdicke der Klebemasse betrug nach dem Trocknen 50 µm.

**Referenz Polymer 4**

Es wurde als Referenzpolymer 3M 8142 mit einer Schichtdicke von 50 µm verwendet. Hierbei handelte es sich um ein transfer tape, also ein Klebeband ohne Träger, mit einer Transmission von größer 99 %, basiert auf einer Reinacrylathaftklebemasse. Vor der Verwendung ist die Haftklebemasse beidseitig mit je einer Trennschicht abgedeckt. Die Folie wird für Optical Clear Anwendungen ausgelobt.

**Transparente Folien und Platten**

Folie 1:

Als Trägerfolie wurde eine 50 µm PET-Folie des Typs Lumirror™ T60 der Firma Toray eingesetzt.

Folie 2:

Als Trägerfolie wurde eine 125 µm PC-Folie Lexan™ 8010 der Firma GE Plastics eingesetzt. Die Folie ist mit zwei Schutzfolien ausgerüstet. Für die weitere Verarbeitung bzw. Beschichtung wird zuerst die trübe Schutzfolie von der PC-Folie abgezogen. Die transparente Schutzfolie kann als Schutzfolie in dem Prozess verbleiben.

Platte 3:

Es wurde eine Quarzglasplatte mit einer Schichtdicke von 2,0 mm eingesetzt.

Platte 4:

Es wurde eine Borkronglasplatte (BK-7) mit einer Schichtdicke von 2,0 mm eingesetzt.

**Prüfungen**

A. Transmission + Haze

Die Bestimmung der Transmission bei 550 nm und die Bestimmung des Haze-Wertes erfolgte nach ASTM D1003. Vermessen wurde der Verbund aus optisch transparenter Klebefolie und der entsprechenden Folie/Folie-, Folie/Platte- oder Platte/Platte-Kombination.

| | |
|---|---|
| **Beispiel 1** | Laminierung von 2 Folien 1 mit Polymer 3. |
| **Beispiel 2** | Laminierung von Glasplatte 3 mit Polymer 3 und Folie 2 |
| **Beispiel 3** | Laminierung von Glasplatte 4 mit Polymer 2 und Folie 2 |
| **Beispiel 4** | Laminierung von 2 x Glasplatte 4 mit Polymer 2 |
| **Beispiel 5** | Laminierung von 2 x Glasplatte 4 mit Polymer 1 |

**Referenz Beispiel 1** Laminierung von 2 x Glasplatte 4 mit Referenz Polymer 4

**Prozess**

In einem ersten Schritt wurde mit einem ca. 130°C - 150°C heißem Bügeleisen die hitzeaktivierbare Klebefolie an den Ecken auf der Basisfolie oder der Basisplatte fixiert. Dabei wurde - wenn eine Folie mit einer Platte kombiniert wurde - immer das festere Material zuerst beschichtet. Anschließend wurde der Release Liner entfernt und auf der offenen Klebemassenseite dann die zweite Folie oder Platte platziert. Dann wurde die gesamte Kammer, einschließlich Heizrollenlaminator evakuiert. Der Druck betrug in allen Fällen maximal 10 mbar. Die Evakuierung erfolgte für 5 Minuten. Anschließend wurde der Verbund im Vakuum durch einen Heizrollenlaminator geführt. Der Heizrollenlaminator wurden mit 170°C, 8 bar Liniendruck und einer Geschwindigkeit von 1 m/min. betrieben.

**Ergebnisse**

Zur Beurteilung der Laminierqualität wurden sowohl die Anzahl der Blasen optisch als auch die Transmission des Verbundes bewertet. Die Ergebnisse sind in der folgenden Tabelle 2 dargestellt:

Tabelle 2

| | Optische Beurteilung | A Transmission [%] | B Haze [%] |
|---|---|---|---|
| Beispiel 1 | keine Blasen | 91.5 | 1.1 % |
| Beispiel 2 | keine Blasen | 92.8 | 0.9 % |
| Beispiel 3 | keine Blasen | 93.4 | 1.2 % |
| Beispiel 4 | keine Blasen | 93.8 | 1.2 % |
| Beispiel 5 | keine Blasen | 93.1 | 0.8 % |
| Referenz Beispiel 1 | starke Blasenbildung | 84.2 | 5.7 % |

Die Ergebnisse in Tabelle 2 belegen, dass sich mit dem beschriebenen Prozess sehr leicht sowohl flexible Folien als auch harte Platten blasenfrei miteinander verkleben lassen. Referenz Beispiel 1 belegt aber auch, dass haftklebrige Produkte für dieses Verfahren nicht eingesetzt werden können, da während des Evakuierprozesses die Haftklebemasse bereits mit den zu verklebenden Materialien verklebt und sich so Lufteinschlüsse bilden, die dann schaumig durch die Haftklebemasse schlagen. Dies führt zu einer schlechten Laminierqualität.

Die Transmissions- und Hazemessungen zeigen auch, dass sehr hohe Transmissionen und sehr geringe Haze-Werte im Verbund erzielt werden können. Die etwas unterhalb von 100 % liegenden Werte deuten auf Reflektionsverluste hin, die z.B. an der Oberseite der Folie durch den Übergang von Luft nach Folie entstehen. Bei Rerenzbeispiel 1 sind die Verluste noch größer, da sich innerhalb der Haftklebemasse noch Reflektionsverluste ergeben.

Insbesondere kann mit dem zuvor beschrieben Verfahren ein hochtransparenter Verbund eines oder mehrere transparenter Materialien, insbesondere von Folien oder Platten mit einer hitzeaktivierbaren Klebefolie erzielt werden, der im Wesentlichen blasenfrei ist, also mit bloßem Auge erkennbar keine sichtbaren Beeinträchtigungen aufweist.

Darüber hinaus lässt sich ein Haze-Wert dieses Verbundes von maximal 10 %, vorzugsweise von maximal 5 %, weiter bevorzugt von maximal 1,5 %, erzielen

Ferner kann auch ein Transmissionsgrad für diesen Verbund vom mindestens 80 %, insbesondere von mindestens 90 %, erzielt werden.

**Patentansprüche**

1. Verfahren zur blasenfreien und hochfesten Verklebung von transparenten Materialien,
bei dem auf dem transparenten Material eine transparente, hitze-aktivierbare Klebefolie angeordnet wird und
bei dem die hitze-aktivierbare Klebefolie durch Wärmezufuhr aktiviert wird,
**dadurch gekennzeichnet,**
**dass** die Aktivierung der hitze-aktivierbare Klebefolie unter Applikation von Vakuum auf die Anordnung aus transparenten Material und hitze-aktivierbarer Klebefolie durchgeführt und so ein Verbund aus transparentem Material und Klebefolie hergestellt wird.

2. Verfahren nach Anspruch 1, **dadurch gekennzeichnet,**
**dass** ein Vakuum mit einem Druck kleiner 50 mbar, vorzugsweise kleiner 10 mbar, weiter vorzugsweise kleiner 1 mbar, appliziert wird.

3. Verfahren nach Anspruch 1 oder 2, **dadurch gekennzeichnet,**
**dass** die Anordnung aus transparenten Material und hitze-aktivierbarer Klebefolie zusätzlich zu dem Vakuum mit Druck, insbesondere im Bereich von etwa 1,5 bar bis etwa 10 bar, beaufschlagt wird.

4. Verfahren nach einem der vorhergehenden Ansprüche, **dadurch gekennzeichnet,**
**dass** die Applikation von Temperatur und/oder Druck mittels eines Laminators durchgeführt wird.

5. Verfahren nach Anspruch 4, **dadurch gekennzeichnet,**
**dass** zur Applikation von Temperatur und/oder Druck ein Heizrollenlaminator verwendet wird,
vorzugsweise, dass der Heizrollenlaminator mit einer Geschwindigkeit zwischen etwa 0,1m/min und etwa 10 m/min betrieben wird.

6. Verfahren nach einem der vorhergehenden Ansprüche, **dadurch gekennzeichnet,**
**dass** vor Aktivierung der hitze-aktivierbaren Klebefolie ein zweites transparentes Material auf der zweiten Seite der zu verklebenden hitze-aktivierbaren Klebefolie angeordnet wird.

7. Verfahren nach einem der vorhergehenden Ansprüche, **dadurch gekennzeichnet,**
**dass** die Verbundherstellung bei einer Temperatur zwischen etwa 60°C und etwa 180°C durchgeführt wird.

8. Verfahren nach einem der vorhergehenden Ansprüche, **dadurch gekennzeichnet,**
**dass** die Verbundherstellung in einem Reinraum, insbesondere der Klasse ISO 07, durchgeführt wird.

9. Verfahren nach einem der vorhergehenden Ansprüche, **dadurch gekennzeichnet,**
**dass** die Verbundherstellung semikontinuierlich, insbesondere innerhalb einer Mehrkammeranordnung mit mindestens 3 Kammern, durchgeführt wird.

10. Verfahren nach Anspruch 9, **dadurch gekennzeichnet,**
**dass** die Verbundherstellung mit Taktzeiten von maximal 30 s, vorzugsweise von maximal 15 s, durchgeführt wird.

11. Verfahren nach einem der vorhergehenden Ansprüche, **dadurch gekennzeichnet,**
**dass** eine hitze-aktivierbare Klebefolie basierend auf einer Klebemasse mit einer Erweichungstemperatur größer 25°C, vorzugsweise größer 35°C, weiter vorzugsweise größer 45°C, verwendet wird.

12. Verfahren nach einem der vorhergehenden Ansprüche, **dadurch gekennzeichnet,**
**dass** eine hitze-aktivierbare Klebefolie basierend auf einer Klebemasse auf (Meth)acrylatcopolymer- und/oder (Meth)acrylatblockcopolymerbasis verwendet wird.

13. Verfahren nach einem der vorhergehenden Ansprüche, **dadurch gekennzeichnet,**
**dass** der Verbund aus Klebefolie und transparentem Material nachtemperiert wird, vorzugsweise außerhalb der Vakuumkammer.

14. Verfahren nach einem der vorhergehenden Ansprüche, **dadurch gekennzeichnet,**
**dass** die Nachtemperierung bei einer Temperatur zwischen etwa 100°C und etwa 230°C erfolgt und/oder
**dass** eine Nachtemperierung für etwa 10 Minuten bis etwa 12 Stunden durchgeführt wird.

15. Hochtransparenter Verbund aus einer ursprünglich hitzeaktivierbaren Klebefolie und mindestens einem transparenten Material, insbesondere hergestellt in einem Verfahren gemäß einem der vorhergehenden Ansprüche,
**dadurch gekennzeichnet,**
**dass** der Verbund im Wesentlichen blasenfrei ist.

16. Hochtransparenter Verbund nach Anspruch 15, **dadurch gekennzeichnet,**
**dass** dieser einen Haze-Wert von maximal 10 %, vorzugsweise von maximal 5 %, weiter bevorzugt von maximal 1,5 %, aufweist.

**17.** Hochtransparenter Verbund nach Anspruch 15 oder 16, **dadurch gekennzeichnet, dass** dieser einen Transmissionsgrad vom mindestens 80 %, insbesondere von mindestens 90 %, aufweist.

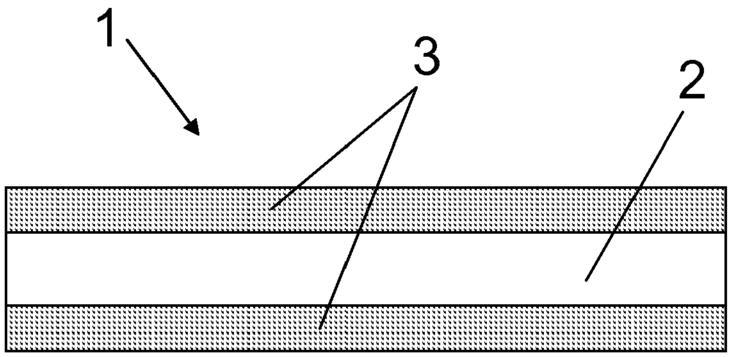


Fig. 1

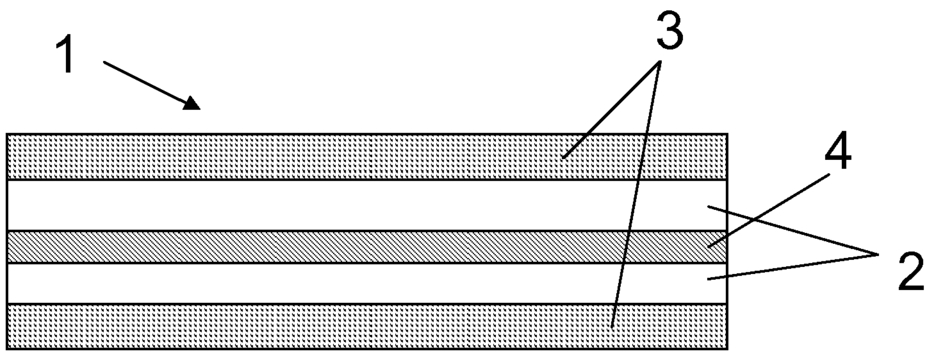


Fig. 2

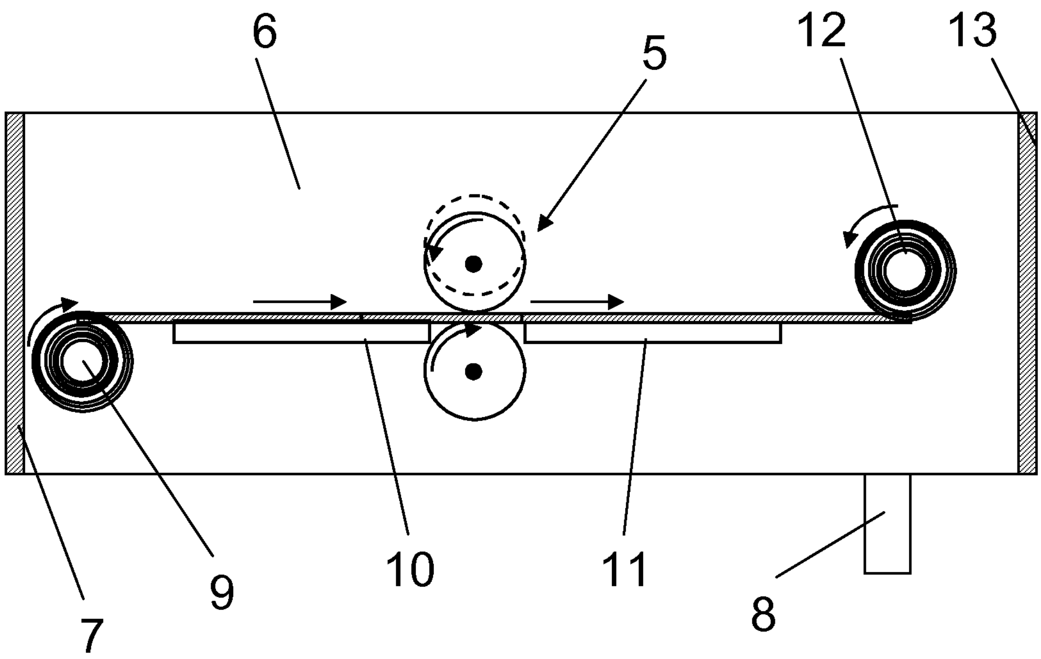


Fig. 3

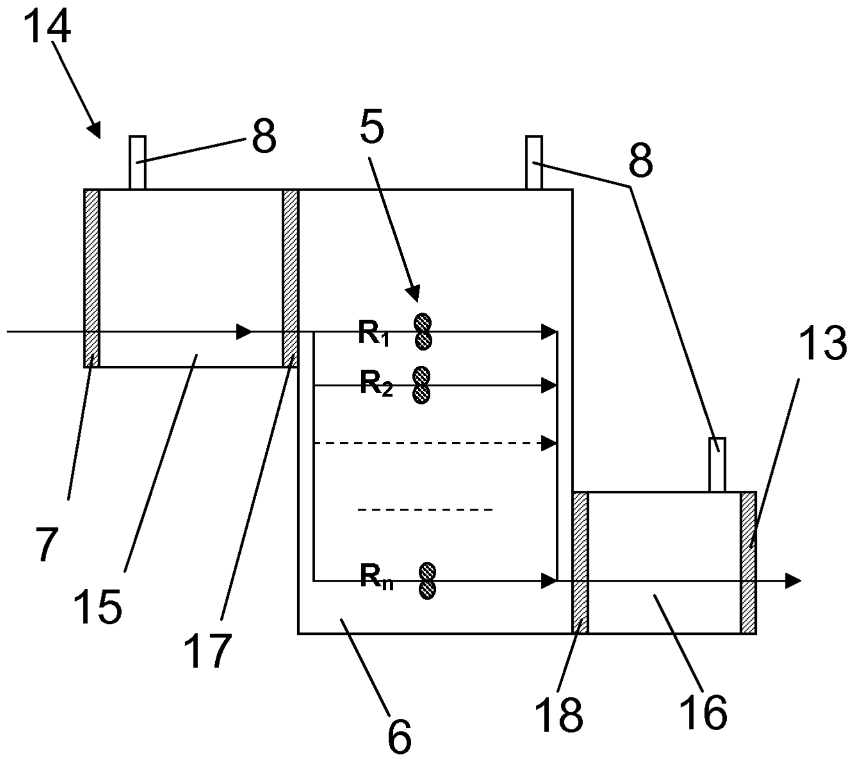


Fig. 4

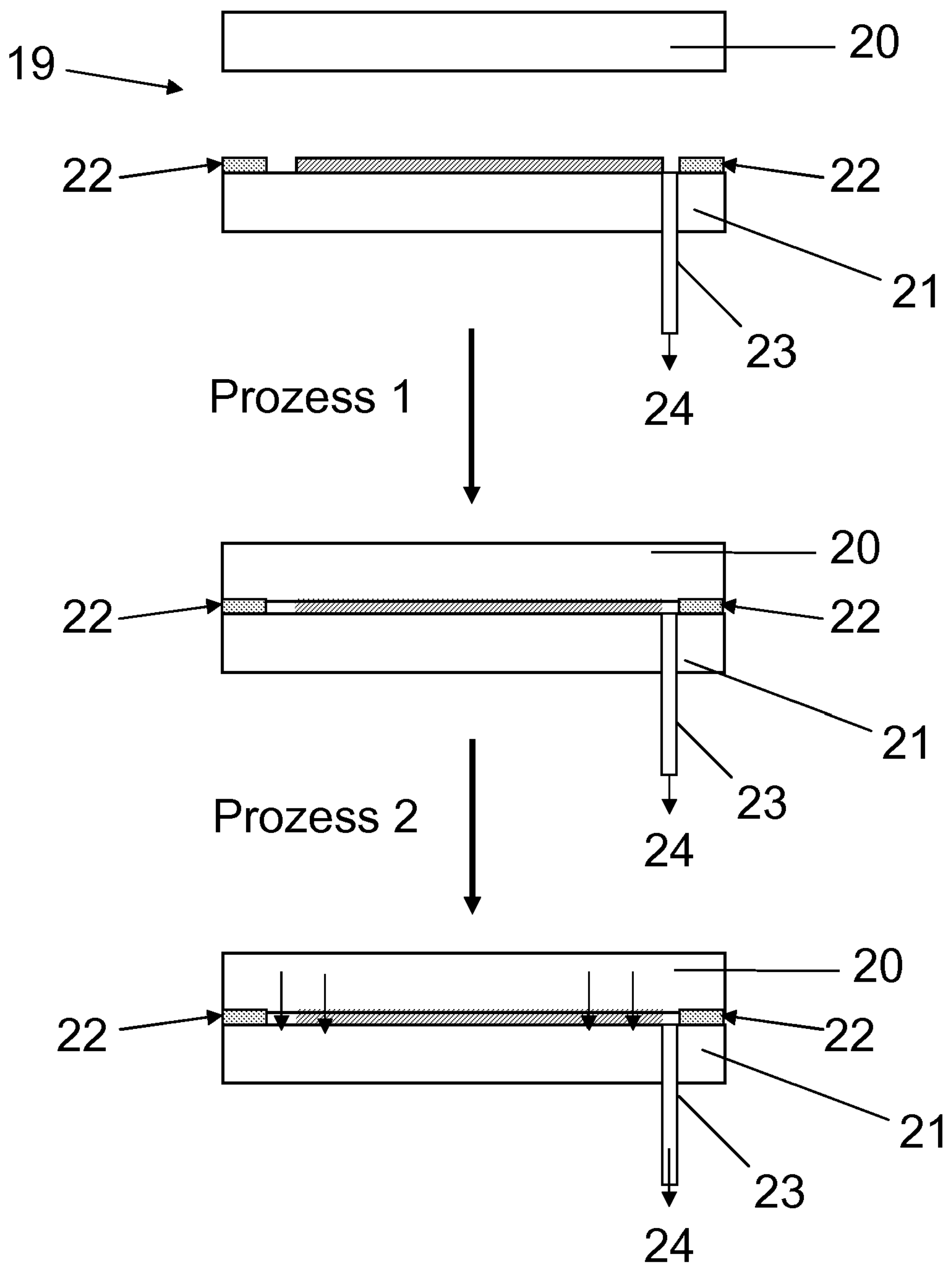
19
20
22
22
21
23
24
Prozess 1
20
22
22
21
23
24
Prozess 2
20
22
22
21
23
24

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **Fouassier.** Photoinititation, Photopolymerization and Photocuring: Fundamentals and Applications. Hanser-Verlag, 1995
- **Carroy et al.** Chemistry and Technology of UV and EB Formulation for Coatings, Inks and Paints. SITA, 1994
- **von Donatas Satas.** Handbook of Pressure Sensitive Adhesive Technology. 1989
- **von Fouassier.** Photoinititation, Photopolymerization and Photocuring: Fundamentals and Applications. Hanser-Verlag, 1995
- **Ergänzend kann Carroy et al.** Chemistry and Technology of UV and EB Formulation for Coatings, Inks and Paints. SITA, 1994
- **T.G. Fox.** *Bull. Am. Phys. Soc.,* 1956, vol. 1, 123